# EUROPÄISCHE PATENTSCHRIFT

(11) **EP 2 509 470 B1**
(45) Veröffentlichungstag und Bekanntmachung des Hinweises auf die Patenterteilung: **25.09.2013**
(21) Anmeldenummer: 10787722.7
(22) Anmeldetag: 25.11.2010
(51) Int. Cl.: A47J 27/00, A47J 43/07

(54) **KÜCHENMASCHINE**
KITCHEN APPLIANCE
APPAREIL DE CUISINE

(30) Priorität: 10.12.2009 DE 102009058258
(43) Veröffentlichungstag der Anmeldung: 17.10.2012
(73) Patentinhaber: Vorwerk & Co. Interholding GmbH, 42275 Wuppertal (DE)
(72) Erfinder: MEGGLE, Martin, 33442 Herzebrock (DE); SCHOMACHER, Jutta, 42489 Wülfrath (DE); KEMKER, Uwe, 42105 Wuppertal (DE); LANG, Torsten, 42657 Solingen (DE); WEBER, Klaus-Martin, 42109 Wuppertal (DE); HAASE, Corinna, CH-8810 Horgen (CH)
(74) Vertreter: Müller, Enno
(86) Internationale Anmeldenummer: PCT/EP2010/068199
(87) Internationale Veröffentlichungsnummer: WO 2011/069833

(56) Entgegenhaltungen:
- EP-A1- 1 561 409
- WO-A1-2009/059439
- US-A- 5 363 746
- US-A1- 2006 197 753
- MercuryGirl inc: "Twecipe", , 18. April 2009 (2009-04-18), XP002622859, Gefunden im Internet: URL:http://itunes.apple.com/us/app/twecipe /id310229142?mt=8 [gefunden am 2011-02-15]

## Beschreibung

Die Erfindung betrifft eine Küchenmaschine mit einem Rührgefäß und einem in dem Rührgefäß befindlichen Rührwerk, wobei das Rührgefäß aufheizbar ist.

Derartige Küchenmaschinen sind bereits in vielfältiger Hinsicht bekannt. Es wird beispielsweise auf DE 10 2007 059 236 A1 verwiesen. Darüber hinaus ist bspw. auf die EP 757 530 B1 verwiesen, betreffend ein besonderes Zubereitungsverfahren, weiter auf die EP 1274 333 B1, betreffend eine Heizeinrichtung in einer solchen Küchenmaschine. Des Weiteren wird auf die Küchenmaschine der EP1561409A1 und US5,363,746 verwiesen.

Küchenmaschinen der in Rede stehenden Art sind bspw. dafür ausgelegt, insbesondere eine selbsttätige, automatische Abarbeitung von Rezepten zu ermöglichen, bei welcher programmgesteuert insbesondere die Temperatur und die Rührwerksdrehzahl, weiter insbesondere deren Aktivierungszeiten in Abhängigkeit vom Rezept selbsttätig geregelt werden.

In dieser Hinsicht stellt sich der Erfindung die Aufgabe, die Auswahl eines Rezeptes für den Benutzer zu unterstützen.

Diese Aufgabe ist gemäß des Gegenstands der Ansprüche 1 und 3 gelöst, wobei durch Bewegen der Küchenmaschine und/oder eines mit der Küchenmaschine im Datenaustausch befindlichen Gerätes ein Rezept als Vorschlag erscheint.

Dieser Vorschlag kann aufgrund einer fest vorgegebenen Reihenfolge erscheinen. Er kann aber auch zufällig ausgewählt werden. Hierzu kann dann vorgesehen sein, dass in der Küchenmaschine und/ oder dem Gerät ein Zufallsgenerator angeordnet ist, der im Zusammenhang mit einer die Rezepte verwaltenden Datenbank dann auf das Bewegungsereignis hin ein Rezept auswählt.

Das Bewegungsereignis kann durch ein Schütteln hervorgerufen sein. Es kann auch durch eine rasche oder langsame lineare Bewegung hervorgerufen sein, beispielsweise durch Kippen der Küchenmaschine oder des Gerätes um eine Körperachse. Hinsichtlich des mobilen Gerätes, prinzipiell aber auch hinsichtlich der Küchenmaschine selbst, kann auch etwa eine Überkopfhaltung den Vorschlag auslösen. Bevorzugt ist zur selbsttätigen Rezeptauswahl eine Bewegung der Küchenmaschine oder des Geräts aus einer üblichen (Betriebs-) stellung heraus nötig.

Die Erfindung betrifft weiterhin eine Küchenmaschine wie eingangs vorausgesetzt und beschäftigt sich mit der Aufgabe, eine einfache Auswahl eines Rezeptes zu ermöglichen.

Hierzu ist vorgesehen, wie auch grundsätzlich bereits im vorstehenden Zusammenhang angesprochen, dass ein Zufallsgenerator in der Küchenmaschine und/oder dem Gerät vorgesehen ist und dass ein Rezept als Vorschlag mittels des Zufallsgenerators auswählbar ist. Auch in diesem Zusammenhang ist wiederum bevorzugt, dass eine Vielzahl von Rezepten in Form einer Datenbank in der Küchenmaschine und/oder dem mobilen Gerät gespeichert sind und hieraus die Auswahl erfolgt. Die Datenbank ist bevorzugt in einem nicht flüchtigen Speicher abgelegt.

Weitere Merkmale sind nachstehend, auch in der Figurenbeschreibung, oftmals in ihrer bevorzugten Zuordnung zu den bereits vorstehend erläuterten Anspruchskonzepten beschrieben, sie können aber auch in einer Zuordnung zu nur einem oder mehreren einzelnen Merkmalen, die hier beschrieben sind, insbesondere der bereits abgehandelten Ansprüche, oder unabhängig oder in einem anderen Gesamtkonzept von Bedeutung sein. Auch ist möglich, die Maßnahmen der bereits behandelten Ansprüche kombiniert vorzusehen.

So ist weiter bevorzugt, dass das im Datenaustausch mit der Küchenmaschine befindliche Gerät ein Handgerät, wie beispielsweise ein Mobiltelefon, ein Smartphone oder ein PDA, in weiterer Ausgestaltung ein Standgerät, wie beispielsweise ein PC oder ein Notebook ist. Der Datenaustausch zwischen dem Gerät und der Küchenmaschine erfolgt in einer Ausgestaltung über ein Kabel. Weiter bevorzugt erfolgt der Datenaustausch kabellos, so weiter insbesondere mittels WLAN, WPAN, Bluetooth oder weiter beispielsweise mittels einer Infrarot-Schnittstelle. Auch ist eine unmittelbare Kontaktierung des Gerätes mit der Küchenmaschine zur Datenübertragung möglich, so beispielsweise unter Nutzung einer USB-Schnittstelle. Auch ist bevorzugt die Datenübertragung unter Nutzung des Internets oder Intranets vorgesehen.

Entsprechende Rezepte können in der Küchenmaschine und/ oder in dem Gerät - bevorzugt Mobilgerät - als Text und/oder als Bilddatei und/oder auch weiter als Videosequenz hinterlegt sein. Hierbei dienen die Bilder und die Videosequenzen für den Benutzer zur Veranschaulichung dessen, was bei der Abarbeitung des Rezeptes in der Küchenmaschine vor sich geht und/oder zur Darstellung des Ergebnisses. Darüber hinaus enthalten die Rezepte entsprechende Daten, die als Steuerungsdaten an die Küchenmaschine übertragbar sind und zur Durchführung und Abarbeitung eines Rezeptes übertragen werden bzw. innerhalb der Küchenmaschine abgerufen werden.

Bevorzugt ist vorgesehen, dass durch Bewegen des weiter bevorzugt als Mobilgerät ausgebildeten Gerätes ein Rezept als Vorschlag erscheint. Hierzu ist bevorzugt eine in dem Gerät vorgesehene Datenbank mit einer Vielzahl von Rezepten zufolge der Bewegung des Gerätes, beispielsweise Kippen oder Schütteln, ansteuerbar. Eine entsprechend diese Gerätebewegung, beispielsweise Schüttelbewegung erfassende Sensorik löst bevorzugt einen Zufallsgenerator aus, der entsprechend zufällig ein in der Datenbank abgelegtes Rezept zur Auswahl abruft. In alternativer Ausgestaltung wird zufolge einer solchen Gerätebewegung (beispielsweise Schüttelbewegung) ein Rezept aus einer in der Küchenmaschine vorgesehenen Datenbank abgerufen und ggf. auf dem Gerät angezeigt; alternativ auf einem Display der Küchenmaschine.

Der zufällig oder aufgrund einer fest vorgegebenen Reihenfolge bevorzugt auf einem Display der Küchenmaschine oder des Gerätes erscheinende Rezeptvorschlag wird durch den Benutzer bei Gefallen bestätigt, weiter gegebenenfalls über entsprechend vorgesehene Eingabehilfen an der Küchenmaschine und/oder an dem Gerät angepasst. Ein Ablehnen des Rezeptvorschlages erfolgt bevorzugt durch entsprechenden Tastendruck, weiter bevorzugt durch erneutes Bewegen der Küchenmaschine und/oder des Gerätes, was die Anzeige eines neuen Rezeptvorschlages zur Folge hat.

Weiter bevorzugt ist neben der vorgeschlagenen, gegebenenfalls zufälligen Rezeptvorgabe zufolge Bewegen der Küchenmaschine und/oder des Gerätes auch eine gezielte Rezeptabfrage möglich, beispielsweise über eine thematische Vorauswahl (Vorspeisen, Nudelgerichte, Diätspeisen und so weiter).

Als Rezeptdaten werden bevorzugt die Informationen über Zutaten (Menge, Einheit, Zutatenbezeichnung, Beschreibungen und mögliche Alternativen, Zubereitungsanleitung mit Bedien- bzw. Steuerungsinformationen für das Küchengerät), Zubereitungszeiten, Temperaturen, Zeitangaben und Drehzahlen, bevorzugt in einzelnen Schritten aufgeteilt, dem Benutzer angezeigt. Hierbei können weiter mehrere Rezeptschritte zu Prozessschritten zusammengefasst sein. So können weiter beispielsweise mehrere Zeit-Drehzahl-Temperatur-Einstellungen automatisch vom Programm erfolgen, bis eine erneute Zugabe von Zutaten durch den Benutzer erforderlich ist.

Die Rezeptdaten sind in dem Datenspeicher als Vorgabedaten abgelegt (Bezeichnung, Zutaten, Mengen, Einheit, Zutatenbeschreibung, Temperaturen, Zeiten, Drehzahlen). Ebenso ist bevorzugt eine Zubereitungsanleitung mit den Bedieninformationen in der Datenbank hinterlegt. Diese Daten sind bevorzugt in Schrift und/oder Bild und/oder Ton abgelegt und können weiter bevorzugt entsprechend wiedergegeben werden.

Weiter bevorzugt sind die Rezeptdaten durch den Benutzer editierbar, wobei die Modifikation der Daten durch den Benutzer vor Beginn oder alternativ auch während des Programmablaufs vorgenommen werden kann.

Zufolge insbesondere der vorbeschriebenen, abgelegten Daten zu jedem Rezept, ist es dem Benutzer ermöglicht, ein insbesondere zufällig aus der Datenbank ausgewähltes Rezept insbesondere zunächst auf Vorhandensein der in dem Rezept vorgegebenen Zutaten hin zu überprüfen, weiter beispielsweise auch hinsichtlich der Nährwerte und/oder etwaiger bekannter Allergene (beispielsweise im Hinblick auf eine Diätzubereitung).

Hinsichtlich des Zufallsgenerators kann auch in der Küchenmaschine ein Zufallsgeneratorknopf vorgesehen sein, der also gesondert zu betätigen ist, um den Zufallsgenerator zu betätigen und bevorzugt die damit dann gekoppelte Zufalls-Auswahl eines Rezeptes herbeizuführen. Darüber hinaus kann diese Funktion auch einem schon bestehenden Schalter, etwa dem Turboschalter bei einer Küchenmaschine mit einer Turbo-Rührwerkseinstellungsmöglichkeit, oder einem Lichtschalter oder dgl. zugewiesen sein. Etwa auch in Kombination von zwei zu drückenden oder zu drehenden Tasten.

Hinsichtlich der Bewegungsauslösung des Zufallsgenerators, also beispielsweise dem beschriebenen Schütteln, kann auch vorgesehen sein, dass hierzu eine bestimmte Rührwerkseinstellung, etwa der genannte Turbobetrieb, vorgesehen wird. Turbobetrieb bedeutet, dass auf einen Tastendruck hin das Rührwerk so schnell wie möglich auf eine sehr hohe Drehzahl beschleunigt, beispielsweise mehr als 1000 bis hin zu 10000 U/min, wobei in die genannte Bandbreite auch alle Zwischenwerte, insbesondere in 10 pro/min. Umdrehungszahlen, als offenbart einbezogen sind. Sodann ist aufgrund der Betätigung der Turbotaste die Rührwerksdrehzahl auch nur so lange in dem genannten hohen Bereich gegeben, wie die Taste gedrückt bleibt. Etwa auch hier in Kombination mit dem Drücken oder Drehen einer Zusatztaste oder eines Zusatzschalters kann dann auch durch die beispielsweise durch den genannten Turbobetrieb hervorgerufene Vibration in dem Gerät die genannte Zufalls-Rezeptauswahl herbeigeführt werden.

Nachstehend ist die Erfindung des weiteren anhand der beigefügten Zeichnung, die jedoch lediglich ein Ausführungsbeispiel wiedergibt, erläutert. Hierbei zeigt:
- Fig. 1: eine Vorderansicht einer Küchenmaschine mit einem Rührgefäß und einem zugeordneten Gerät in Form eines Mobilgeräts;
- Fig. 2: eine Darstellung eines an der Küchenmaschine und/oder an dem Gerät ausgebildeten Displays;
- Fig. 3: ein Abfolgeschema von vorgesehenen Programmfunktionen und Inhalten.

Dargestellt und beschrieben ist eine Küchenmaschine 1, wie sie auch als "Vorwerk-Thermomix" bekannt ist. Die Küchenmaschine 1 weist ein Rührgefäß 2 auf, mit einem am Boden des Rührgefäßes angeordneten, in der Darstellung nicht sichtbaren Rührwerk. Weiter ist das Rührgefäß 2 aufheizbar, beispielsweise durch eine bodenseitig des Rühr gefäßes vorgesehene elektrische Widerstandsheizung (vgl. etwa eingangs genannte EP 1274 333 B1).

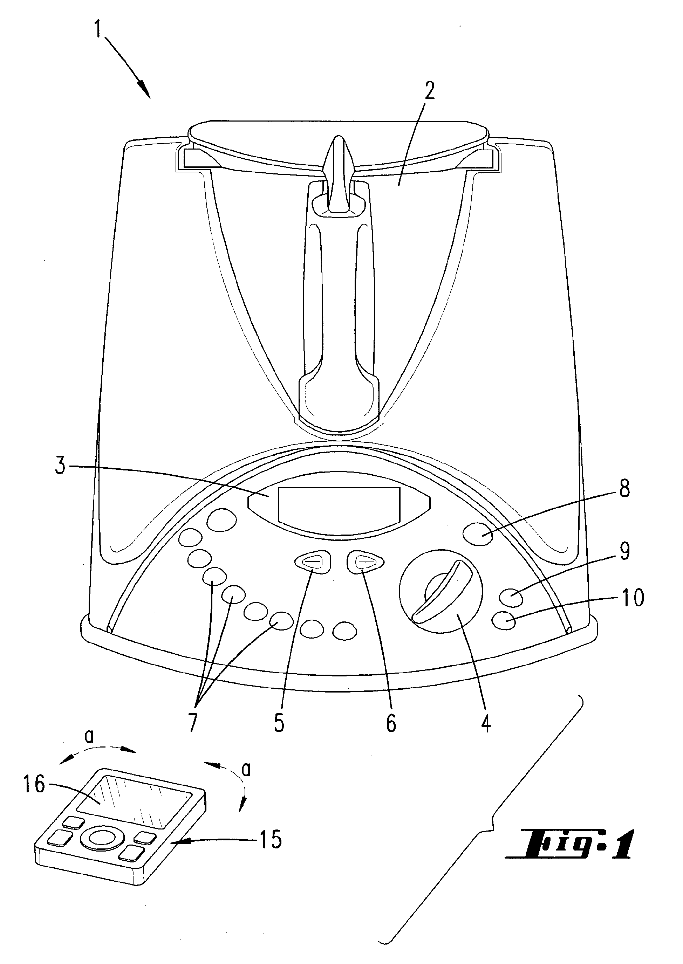

Auf der in Figur 1 sichtbaren Bedienseite des Gerätes ist ein Display 3 vorgesehen, des Weiteren ein Drehwahlschalter 4 zur Einstellung einer Rührwerksgeschwindigkeit. Zudem sind Betätigungstasten 5 und 6 für eine Zeiteinstellung über das Display vorgesehen. Weiter sind hier in Form einer Kreislinie aufgereihte Tasten 7 vorgesehen, die eine Temperaturvorwahl ermöglichen. Darüber hinaus sind bevorzugt Schalter 8 bis 10 vorgesehen, um bestimmte Funktionen, wie etwa eine Turbofunktion, eine Wiegefunktion oder dergleichen auszulösen.

Weiter ist in Figur 1 ein Gerät 15 dargestellt. Hierbei handelt es sich bevorzugt um ein mobiles Handgerät. Dieses weist ebenfalls ein Display 16 auf, gegebenenfalls in Form eines Touchscreens. Zudem sind an dem Gerät 15 Bedientasten 17 vorgesehen, insbesondere zur Navigation des auf dem Display 16 darstellbaren Menüs, weiter zur Befehlseingabe.

Das Gerät 15 steht mit der Küchenmaschine 1 im Datenaustausch. Hierzu ist bevorzugt eine kabellose Verbindung vorgesehen, weiter bevorzugt eine bidirektionale Kommunikation. Es ist weiter bevorzugt eine WLAN, WPAN oder Infrarot-Verbindung vorgesehen, wozu sowohl das Gerät 15 als auch die Küchenmaschine 1 mit entsprechenden Sendern und Empfängern ausgerüstet sind.

Das mobile Gerät 15 ist mit einem nicht dargestellten Bewegungssensor versehen. Dieser erfasst eine insbesondere ruckartige Bewegung des Gerätes, beispielsweise eine Schüttelbewegung (dargestellt durch die Pfeillinien a in Figur 1).

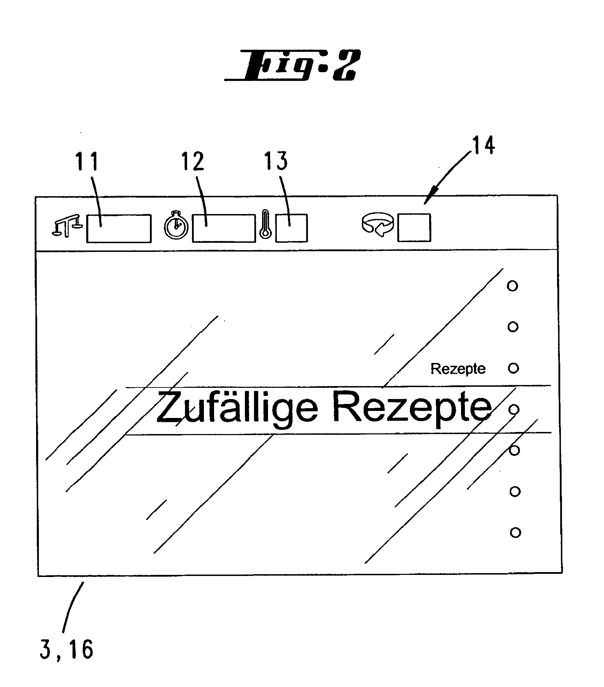

Figur 2 zeigt eine mögliche Displaydarstellung der Küchenmaschine 1 selbst und/ oder des mobilen Gerätes 15, in welcher Displaydarstellung ersichtlich unter Rezepten ("recipes"), als Favoriten gespeicherte Rezepte, Spezialfunktionen, Einstellungen, die nicht jeweils geändert werden müssen, etc. ausgewählt werden kann. Im oberen Bereich des Displays 3,16 ist eine Einwaagemenge 11 und/oder eine eingestellte Zeit 12 und/oder eine eingestellte Temperatur 13 darstellbar. Ein Symbol 14 kann etwa darauf hinweisen, dass eine Abarbeitung im Gange ist.

Das Display 3 der Küchenmaschine 1 ist in einer Ausgestaltung wie weiter bevorzugt auch das Display 16 des mobilen Gerätes 15 als Touchscreen-Bildschirm ausgebildet.

Weiter zeigt das Display 3, 16 neben dem standardmäßig vorgegebenen, weiter bevorzugt zu Kapiteln unterteilten Rezepten die Möglichkeit auf, Rezepte zufällig auszuwählen ("random recipes"). Ist dieser Menüpunkt angewählt, so löst eine Bewegung des mobilen Gerätes 15, bevorzugt ein Schütteln desselben, zur Folge entsprechender Erfassung über den Bewegungssensor ein zufälliges Auswählen eines Rezeptes aus der Rezept-Datenbank. Letztere ist in dem Gerät 15 in einem bevorzugt nicht flüchtigen Speicher abgelegt. Alternativ oder auch kombinativ hierzu ist die Datenbank in der Küchenmaschine 1 abgelegt und wird bei Aufrufen des entsprechenden Menüpunktes zufolge Datenaustausch auf das mobile Gerät 15 übertragen. Weiter alternativ wird zufolge entsprechender Bewegung des Gerätes 15 von dem Gerät 15 ein Signal an die Küchenmaschine 1 übertragen, zufolge dessen in einer küchenmaschinenseitig hinterlegten Datenbank ein Rezept ausgewählt und zurück an das mobile Gerät 15 versandt wird.

Anstelle einer zufälligen Auswahl von Rezepten kann auch ein nächstes Rezept in einer fest vorgegebenen Reihenfolge auf dem Display 16, gegebenenfalls auch auf dem Display 3 der Küchenmaschine 1 erscheinen.

Der Benutzer kann den entsprechenden Rezeptvorschlag beispielsweise durch Schalterbetätigung akzeptieren, wonach die Küchenmaschine 1 entsprechend programmiert wird (dies insbesondere hinsichtlich der Temperaturwahl, Drehzahlwahl und Zeitintervalle). Ist der Rezeptvorschlag für den Benutzer nicht akzeptabel, so fordert dieser durch erneutes Bewegen (Schütteln) des mobilen Gerätes 15 ein neues Rezept an.

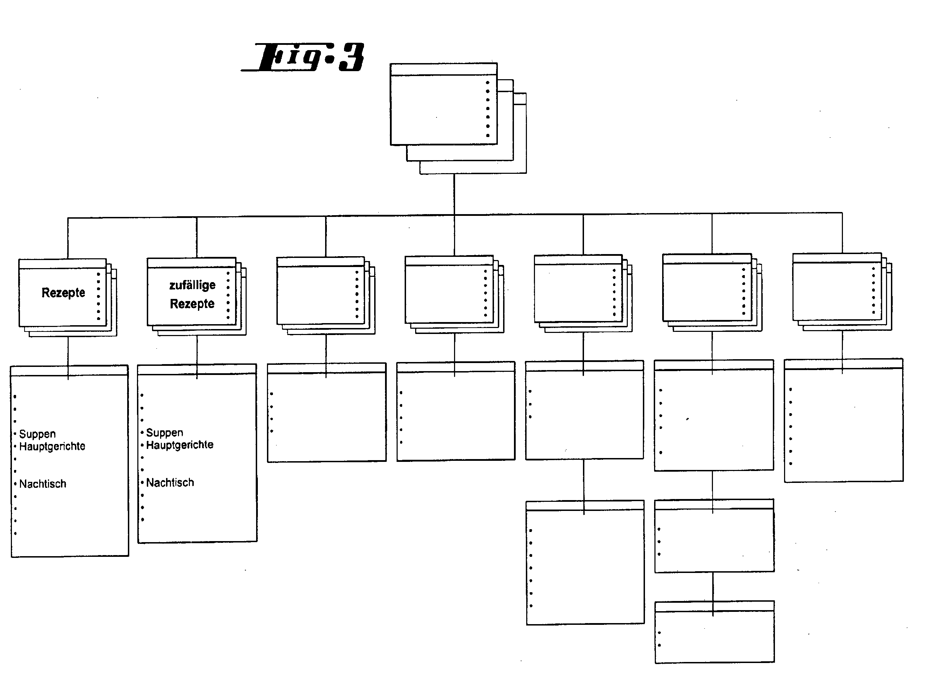

Figur 3 zeigt eine mögliche Auswahl aus den bereits vorstehend zu Figur 2 auf dem Display 3 bzw. 16 vorgegebenen Kapiteln. Zu diesen Kapiteln sind jeweils in Form von Datenbanken Daten vorgehalten. So weist das Kapitel "random recipes" ähnlich dem Kapitel "recipes" Unterkapitel auf, beispielsweise Rezepte beinhaltend für Suppen ("soups"), Hauptgerichte ("main dishes") oder auch Nachtisch ("desserts"). Diese Unterkapitel können auch in der beschriebenen Funktion "zufälliger Rezeptvorschlag" angewählt werden, um so die Vorschläge einzugrenzen. Unter dem Unterkapitel "alle Rezepte" ("all recipes") ist nach entsprechender Anwahl und Bewegen des mobilen Gerätes 15 bevorzugt ein zufälliger Rezeptvorschlag aus dem Gesamtbestand der Datenbank abrufbar.

Die vorbeschriebenen Funktionen sind darüber hinaus auch allein durch die Küchenmaschine 1 auslösbar, beispielsweise in der Form, dass zur zufälligen Rezeptauswahl nach entsprechendem Anwählen des Kapitels im Display 3 eine beispielsweise Schüttelbewegung der Küchenmaschine 1 einen Zufallsgenerator auslöst, der entsprechend ein Rezept als Vorschlag auswählt und auf dem Display 3 anzeigt.

### Bezugszeichenliste

- 1: Küchenmaschine
- 2: Rührgefäß
- 3: Display
- 4: Drehwahlschalter
- 5: Betätigungstaste
- 6: Betätigungstaste
- 7: Taste
- 8: Schalter
- 9: Schalter
- 10: Schalter
- 11: Einwaagemenge
- 12: Zeit
- 13: Temperatur
- 14: Symbol
- 15: Gerät
- 16: Display

- a: Bewegungspfeil

## Patentansprüche

1. Küchenmaschine (1) mit einem Rührgefäß (2) und einem in dem Rührgefäß (2) befindlichen Rührwerk, wobei das Rührgefäß (2) aufheizbar ist, und in der Küchenmaschine (1) eine Mehrzahl von Rezepten gespeichert sind, **dadurch gekennzeichnet, dass** die Küchenmaschine (1) einen Bewegungssensor aufweist und dass die Küchenmaschine (1) so eingerichtet ist, durch Bewegen der Küchenmaschine (1) ein Rezept als Vorschlag erscheinen zu lassen.

2. Küchenmaschine nach Anspruch 1, **dadurch gekennzeichnet, dass** in der Küchenmaschine (1) ein Zufallsgenerator vorgesehen ist und dass ein Rezept als Vorschlag mittels des Zufallsgenerators auswählbar ist.

3. System bestehend aus einer Küchenmaschine (1) mit einem Rührgefäß (2) und einem in dem Rührgefäß (2) befindlichen Rührwerk, wobei das Rührgefäß (2) aufheizbar ist, sowie einem im Datenaustausch mit der Küchenmaschine befindlichen Gerät, das als Handgerät, beispielsweise als ein Mobiltelefon, oder als Standgerät ausgebildet ist, **dadurch gekennzeichnet, dass** in der Küchenmaschine (1) eine Mehrzahl von Rezepten gespeichert sind, dass das Gerät (15) einen Bewegungssensor aufweist und das System so eingerichtet ist, dass durch Bewegen des Gerätes (15) ein Rezept aus einer in der Küchenmaschine vorgesehenen Datenbank abrufbar und auf einem Display der Küchenmaschine (1) anzeigbar ist.

4. System nach Anspruch 3, **dadurch gekennzeichnet, dass** ein Zufallsgenerator in dem Gerät (15) vorgesehen ist und dass das Rezept als Vorschlag mittels des Zufallsgenerators auswählbar ist.

## Claims

1. Kitchen appliance (1) with a mixing vessel (2) and a blade unit located in the mixing vessel (2), the mixing vessel (2) being heatable and a multiplicity of recipes being stored in the kitchen appliance (1), **characterized in that** the kitchen appliance (1) has a motion sensor and that the kitchen appliance (1) is so arranged that a recipe can be made to appear as a suggestion when the kitchen appliance (1) is moved.

2. Kitchen appliance according to Claim 1, **characterized in that** a random generator is provided in the kitchen appliance (1) and that a recipe can be selected as a suggestion by means of the random generator.

3. System consisting of a kitchen appliance (1) with a mixing vessel (2) and a blade unit located in the mixing vessel (2), the mixing vessel (2) being heatable, and the system including a device that can exchange data with the kitchen appliance, the device being formed as a handheld unit, for example as a mobile telephone, or as a standalone unit, **characterized in that** a multiplicity of recipes are stored in the kitchen appliance (1), that the device (15) has a motion sensor, and that the system is so arranged that a recipe can be called up from a database provided in the kitchen appliance when the device (15) is moved and can be shown on a display on the kitchen appliance (1).

4. System according to Claim 3, **characterized in that** a random generator is provided in the device (15), and that a recipe can be selected as a suggestion by means of the random generator.

## Revendications

1. Appareil de cuisine (1) ayant un récipient de mélange (2) et un agitateur situé dans le récipient de mélange (2), le récipient de mélange (2) pouvant être chauffé, **caractérisé en ce qu'**une pluralité de recettes sont mémorisées dans l'appareil de cuisine (1), **en ce que** l'appareil de cuisine (1) comporte un capteur de mouvement, et **en ce que** l'appareil de cuisine (1) est agencé de sorte qu'un mouvement de l'appareil de cuisine (1) fait apparaître une proposition de recette.

2. Appareil de cuisine selon la revendication 1, **caractérisé en ce qu'**un générateur aléatoire est prévu dans l'appareil de cuisine (1), et **en ce qu'**une proposition de recette peut être sélectionnée au moyen du générateur aléatoire.

3. Système comportant un appareil de cuisine (1) ayant un récipient de mélange (2) et un agitateur situé dans le récipient de mélange (2), le récipient de mélange (2) pouvant être chauffé, de même qu'un dispositif pouvant échanger des données avec l'appareil de cuisine, qui est réalisé sous la forme d'un dispositif mobile, par exemple un téléphone portable, ou sous la forme d'un dispositif fixe, **caractérisé en ce qu'**une pluralité de recettes sont mémorisées dans l'appareil de cuisine (1), **en ce que** le dispositif (15) comporte un capteur de mouvement, et **en ce que** par un mouvement du dispositif (15), une recette située dans une base de données prévue dans l'appareil de cuisine est accessible, et peut être affiché sur un écran d'affichage de l'appareil de cuisine (1)

4. Système selon la revendication 3, **caractérisé en ce qu'**un générateur aléatoire est prévu dans le dispositif (15), et **en ce qu'**une proposition de recette peut être sélectionnée au moyen du générateur aléatoire.
